# EUROPEAN PATENT APPLICATION

(11) **EP 1 942 402 A1**
(43) Date of publication of application: **09.07.2008**
(21) Application number: 07117742.2
(22) Date of filing: 02.10.2007
(51) Int. Cl.: G06F 3/048

(54) **Method to provide menu, using menu set and multimedia device using the same**

(30) Priority: 28.12.2006 KR 20060136712; 28.12.2006 KR 20060136713; 28.12.2006 KR 20060136714
(71) Applicant: Samsung Electronics Co., Ltd., Suwon-si, Gyeonggi-Do (KR)
(72) Inventor: Hwang, Ho-ik, Gyeonggi-do (KR); Kim, Hyun-chung, Seoul (KR)
(74) Representative: Grünecker, Kinkeldey, Stockmair & Schwanhäusser Anwaltssozietät

(57) **Abstract**

A method to provide a menu using a movable menu set, and a multimedia device using the method. The method to provide a menu includes moving a menu set including at least according to a user manipulation on a touch screen, and displaying the menu set. Therefore, a user can be provided with a menu which can be manipulated more easily, and which is displayed with a superior visual effect on a screen that is relatively small in size, using a menu set that can move on a touch screen.

## Description

### BACKGROUND OF THE INVENTION

### 1. Field of the Invention

The present general inventive concept relates to a method to provide a menu, and more particularly, to a method to provide a menu through a touch screen of a multimedia device which performs various functions.

### 2. Description of the Related Art

Recently, the range of functions of multimedia devices has increased, which has enabled implementation of video apparatuses with digital technologies.

Because multimedia devices have many functions, methods for using multimedia devices are diverse and complicated. Additionally, a large number of menus are provided through screens for users due to having so many functions.

However, since portable multimedia devices have small screens, it is important to provide diverse and complicated menus more efficiently. In addition, there is a need for menus which can be easily manipulated by a user and which have excellent visual effects.

### SUMMARY OF THE INVENTION

The present general inventive concept provides a method to provide a menu and a multimedia device using the method, in which a user can be provided with a menu which enables easier manipulation, and which is displayed with a superior visual effect on a screen that is relatively small in size using a menu set that can move on a touch screen.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may also be achieved by providing a method to provide a menu on a display, the method including displaying a menu set including at least one icon on a touch screen , moving the menu set according to a user manipulation on the touch screen, and displaying the menu set.

The menu set may include at least one menu icon indicating at least one menu item, and a control icon to input a control command relating to display of the menu set.

The control command relating to display of the menu set may include a command to move and display the menu set and a command to change a display state of the menu set.

The command to change the display state of the menu set may include a command to enable the at least one menu icon of the menu set to disappear from the touch screen, a command to allow the at least one menu icon of the menu set to be semi-transparently displayed, and a command to enable the menu set to disappear from the touch screen.

The moving operation may include moving a center of the menu set to one lattice from among lattices on the touch screen, and displaying the menu set.

The lattices may be visibly displayed on the touch screen.

The at least one menu icon may include a plurality of icons having the same size. Outlines of the icons of the at least one menu icon may have the same shape, and the outline may have a circular shape.

The user manipulation may include at least one of touching the touch screen twice and dragging on the touch screen.

The moving operation may include, if the user drags a spot of the menu set, moving and displaying the menu set so that the spot of the menu set may move by being dragged.

The spot of the menu set may be the control icon used to input the control command relating to display of the menu set.

The moving operation may include, if the user touches a spot of the menu set and touches a spot on the touch screen, moving and displaying the menu set so that the spot of the menu set may move to the spot on the touch screen.

The moving operation may include, if the user drags a spot of the menu set, moving and displaying the menu set so that the spot of the menu set may move to a lattice closest to the drag end position among lattices on the touch screen.

The moving operation may include, if the user drags a spot of the menu set, moving and displaying the menu set so that the spot of the menu set may move to a lattice placed in a direction of dragging among lattices which are adjacent to the spot of the menu set on the touch screen.

The foregoing and/or other aspects and utilities of the present general inventive concept may also be achieved by providing a method to display a menu using a touch screen, the method including displaying a menu set including two or more menu icons, displaying a control icon to control the menu set, and moving the menu set according to a movement of the control icon and displaying the menu set.

The menu set may include at least two selected from among menu icons indicating search, game, recording, music, movie, photograph, document and digital multimedia broadcasting (DMB) menu items. The menu icons may execute commands corresponding to each menu item, and the control icon may execute the command to change the display state of the menu set.

The foregoing and/or other aspects and utilities of the present general inventive concept may also be achieved by providing a method to display a menu using a touch screen, the method including displaying a menu set including two or more icons including a menu icon having a menu item and a control icon to control the menu icon, and moving the menu set according to a movement of the control icon and displaying the menu set.

The method to display the menu may further include executing a command corresponding to the menu item, if a user touches the menu icon, and changing the display state of the menu set, if the user touches the control icon.

The foregoing and/or other aspects and utilities of the present general inventive concept may also be achieved by providing a method to display a menu using a touch screen, the method including displaying a menu set including two or more icons including a menu icon having a menu item and a control icon to control the menu icon.

The present general inventive concept provides a method to provide a menu and a multimedia device using the method, in which a menu which the user can more easily manipulate, and which provides a superior visual effect, may also be provided on a screen that is relatively small in size, using a menu set the display state of which may change.

The foregoing and/or other aspects and utilities of the present general inventive concept may also be achieved by providing a method to provide a menu on a display, the method including displaying on a touch screen a menu set including at least one icon, changing a display state of the at least one icon contained in the menu set, and displaying the menu set.

A number of icons contained in the menu set displayed in the changing operation may be less than a number of icons contained in the menu set displayed in the displaying operation.

The menu set displayed in the displaying operation may include a plurality of icons. The changing operation may include changing and displaying the menu set so that the icons contained in the menu set may be combined into a single icon, if a predetermined period of time has elapsed after the displaying operation.

The menu set displayed in the displaying operation may include at least one menu icon indicating at least one menu item, and a control icon used to input a control command relating to display of the menu set. The menu set displayed in the changing operation may be a menu set in which the at least one menu icon disappears from the menu set displayed in the displaying operation.

A number of icons contained in the menu set displayed in the changing operation may be greater than a number of icons contained in the menu set displayed in the displaying operation.

The menu set displayed in the displaying operation may include a single icon. The changing operation may include changing and displaying the menu set so that the menu set may include a plurality of icons, if a specific manipulation is performed by a user on the touch screen after the displaying operation.

The menu set displayed in the displaying operation may include a control icon used to input a control command relating to display of the menu set. The menu set displayed in the changing displaying operation may be a menu set to which at least one menu icon indicating at least one menu item in the menu set displayed in the displaying operation is added.

The specific manipulation of the user on the touch screen may be touching the control icon.

The changing operation may include causing the menu set displayed in the displaying operation to become semi-transparent and displaying the semi-transparent menu set.

The changing operation may be performed if a predetermined period of time has elapsed after the displaying operation.

The method to provide a menu may further include changing and displaying the menu set so that the icons contained in the menu set displayed semi-transparently in the changing operation may be combined into a single icon.

The method to provide a menu may further include allowing the menu set to disappear together with menu blocks displayed on the touch screen.

The allowing operation may be performed if a predetermined period of time has elapsed during which there is no manipulation by the user using the menu set, or if the user touches a region in which there are no the menu set and menu blocks.

The foregoing and/or other aspects and utilities of the present general inventive concept may also be achieved by providing a method to display a menu using a touch screen, the method including a menu set including two or more icons including a menu icon indicating a menu item and a control icon to control the menu icon, detecting contact of a touch screen by a user, and hiding the menu icon, if it is detected that the control icon is touched on the touch screen.

The method to display a menu may further include redisplaying the menu icon, if it is detected that the control icon is again touched after the menu icon has become hidden.

The method to display a menu may further include hiding the control icon, if it is detected that the control icon is again touched after the menu icon has become hidden.

The method to display a menu may further include displaying the control icon and menu icon, if it is detected that the control icon is again touched after the control icon has become hidden.

The foregoing and/or other aspects and utilities of the present general inventive concept may also be achieved by providing a method to display a menu using a touch screen, the method including displaying a menu set including two or more icons including a menu icon indicating a menu item and a control icon to control the menu icon, processing the menu icon to be semi-transparent and displaying the semi-transparent menu icon, if contact of the menu set by a user is not detected for a predetermined period of time, and processing the control icon to be semi-transparent and displaying the semi-transparent control icon, if contact of the menu set by a user is not detected for a predetermined period of time after the menu icon has been processed to become semi-transparent.

The method to display a menu may further include changing the menu set back to an original state if contact of the touch screen by a user is detected after the menu icon or the control icon have been processed to become semi-transparent and the semi-transparent menu icon or the semi-transparent control icon have been displayed.

The present general inventive concept provides a method to provide a menu and a multimedia device using the method, in which it is to possible to display a menu which can be manipulated more easily, and which effectively shows the menu items, using a menu set which may move directly between the uppermost menu items.

The foregoing and/or other aspects and utilities of the present general inventive concept may also be achieved by providing a method to provide a menu, the method including displaying on a touch screen an execution screen in response to execution of a command corresponding to a specific menu item, overlapping a menu set including at least one menu icon indicating at least one uppermost menu item with the execution screen, and displaying on the touch screen the menu set together with the execution screen.

The overlapping operation may include semi-transparently displaying the menu set.

The menu set may include a control icon used to input a control command relating to display of the menu set.

The method to provide a menu may further include displaying on the touch screen an execution screen for the uppermost menu item identified by a menu icon selected by a user from among the at least one menu icon contained in the menu set.

The uppermost menu item identified by the menu icon selected by the user may not be the uppermost menu item to which the specific menu item belongs.

The user may select the menu icon by touching the menu set displayed on the touch screen.

The displaying on the touch screen an execution screen for the uppermost menu may include displaying on the touch screen an image in which content among recently played-back content is played back from the last playback time, if the uppermost menu item identified by the menu icon selected by the user relates to playback of content.

The content may include at least one of music content, moving image content and still image content.

The displaying on the touch screen an execution screen for the uppermost menu may include displaying on the touch screen an image which is initiated to play back content among recently played-back content from the last playback time, if the uppermost menu item identified by the menu icon selected by the user relates to playback of content.

The displaying on the touch screen an execution screen for the uppermost menu may include displaying on the touch screen an image on which a list of content capable of being played back is displayed, if the uppermost menu item identified by the menu icon selected by the user relates to playback of content.

The foregoing and/or other aspects and utilities of the present general inventive concept may also be achieved by providing a method to search for a menu using a touch screen, the method including displaying a menu set including menu icons indicating two or more menu items, detecting whether a first menu icon of the menu set is touched, executing a command corresponding to a menu item identified by the first touched menu icon, detecting whether a second menu icon of the menu set is touched, and executing a command corresponding to a menu item identified by the second touched menu icon.

The menu item identified by the first menu icon may be used to search for a menu item relating to video, and the menu item identified by the second menu icon may be used to search for a menu item relating to music.

The command corresponding to the menu item identified by the first menu icon and the command corresponding to the menu item identified by the second menu icon may be simultaneously executed.

The foregoing and/or other aspects and utilities of the general inventive concept may also be achieved by providing a graphical user interface (GUI) apparatus usable with a multimedia apparatus, the GUI including a menu set including a plurality of icons having one or more control icons and a touch screen to display the menu set and to receive one or more input commands through manipulation of the one or more control icons, wherein the one or more input commands changes a display state of the menu set.

The foregoing and/or other aspects and utilities of the general inventive concept may also be achieved by providing a multimedia apparatus, including a housing and a graphical user interface (GUI) disposed within the housing, including a menu set including a plurality of icons having one or more control icons and a touch screen to display the menu set and to receive one or more input commands through manipulation of the one or more control icons, wherein the one or more input commands changes a display state of the menu set.

The foregoing and/or other aspects and utilities of the general inventive concept may also be achieved by providing method of using a graphical user interface (GUI), the method including selecting a control icon from a menu set including a plurality of icons on a touch screen and providing an input command through manipulation of the control icon to change a display state of the menu set including at least one of moving a position of the menu set on the touch screen, changing a number of the plurality of icons being displayed and changing transparency of one or more of the plurality of icons.

The foregoing and/or other aspects and utilities of the general inventive concept may also be achieved by providing a computer-readable recording medium having embodied thereon a computer program to execute a method, wherein the method includes selecting a control icon from a menu set including a plurality of icons on a touch screen and providing an input command through manipulation of the control icon to change a display state of the menu set including at least one of moving a position of the menu set on the touch screen, changing a number of the plurality of icons being displayed and changing transparency of one or more of the plurality of icons.

The foregoing and/or other aspects and utilities of the general inventive concept may also be achieved by providing a method of providing a menu on a display, the method including displaying at least one of a menu set and an image on a touch screen, and changing at least one of a location and a state of the at least one of the menu set and the image according to a user manipulation on the touch screen.

The foregoing and/or other aspects and utilities of the general inventive concept may also be achieved by providing touch screen apparatus including a user interface to generate at least one of a menu set and an image to be displayed on a touch screen, and a controller to change at least one of a location and a state of the at least one of the menu set and the image according to a user manipulation on the touch screen.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIGS. 1A to 1C are views illustrating a movable menu set according to an embodiment of the present general inventive concept;

FIGS. 2A to 2C are views illustrating a process to change a display state of the menu set according to FIG. 1 A;

FIGS. 3A to 3D are views illustrating in detail the menu set according to FIG. 1A;

FIGS. 4A and 4B are views illustrating a process to change lattices displayed on a touch screen when a user touches the touch screen according to an embodiment of the present general inventive concept;

FIGS. 5A to 5D are views illustrating a process to execute a command corresponding to a menu item using a menu icon of a menu set, and a process to change the display state of the menu set when executing the command corresponding to the menu item according to an embodiment of the present general inventive concept;

FIGS. 6A and 6B are views illustrating another process to change a display state of the menu set of FIG. 5A;

FIGS. 7A and 7B are views illustrating a process to move directly to another menu item using the menu set of FIG. 5A while executing a command corresponding to a specific menu item according to an embodiment of the present general inventive concept;

FIGS. 8A and 8B are views illustrating a process to convert a menu set into a manipulation set and displaying the manipulation set when a content player and the menu set of FIG. 5A are displayed on a touch screen according to an embodiment of the present general inventive concept;

FIGS. 9A and 9B are views illustrating a process to change a menu item identified by a menu icon to another menu item according to an embodiment of the present general inventive concept;

FIGS. 10A and 10B are views illustrating a process to display a list of content that has been recently played back according to an embodiment of the present general inventive concept;

FIG. 11 is a block diagram illustrating a multimedia device capable of providing a graphical user interface (GUI) which is implemented using the menu set described above according to an embodiment of the present general inventive concept; and

FIG. 12 is a flowchart illustrating a method of displaying controlling a menu set and an image on a touch screen according to a manipulation on the touch screen according to an embodiment of the present general inventive concept.

### DETAILED DESCRIPTION OF THE PREFERRED EMBODIMENTS

Reference will now be made in detail to embodiments of the present general inventive concept, examples of which are illustrated in the accompanying drawings, wherein like reference numerals refer to the like elements throughout. The embodiments are described below in order to explain the present general inventive concept by referring to the figures.

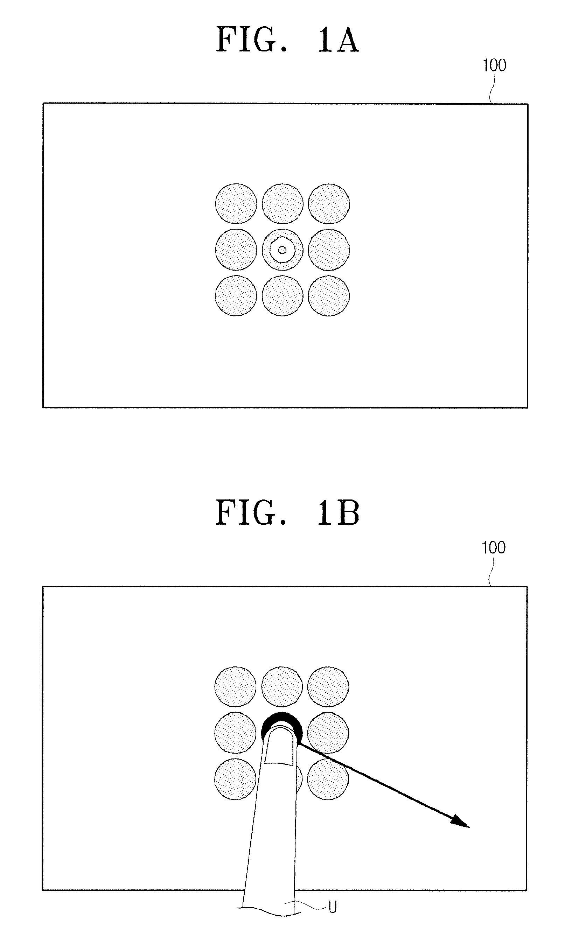

FIGS. 1A to 1C are views illustrating a movable menu set. FIG. 1A illustrates the movable menu set (hereinafter, simply referred to as a "menu set") displayed on a touch screen 100, and the menu set may include, for example, nine icons.

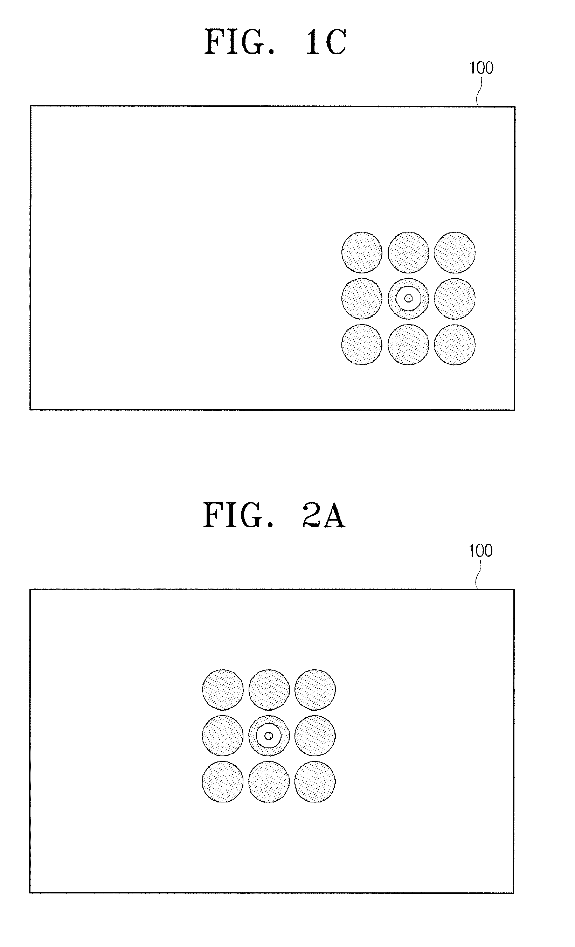

The menu set may move on the touch screen 100. That is, the menu set may move as illustrated in FIG. 1C by a drag operation performed by a user U as illustrated in FIG. 1B. More specifically, if the user U drags an "icon placed at the center of the menu set" (hereinafter, simply referred to as a "central icon") to a desired position, the menu set may move by being dragged. The touch screen 100 may detect a signal continuing from a location to another location of the touch screen 100 when a user drags the icon, and the detected signal is used to move or change its position to another location.

Additionally, the display state of the menu set may be changed. A process to change a display state of the menu set will be described in detail with reference to FIGS. 2A to 2C.

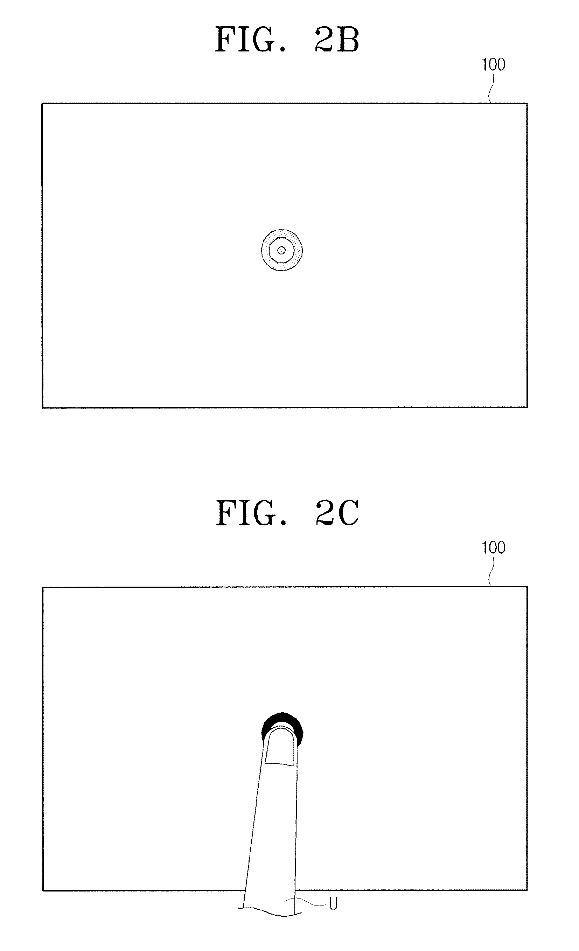

If the user U touches the central icon when the menu set is displayed on the touch screen 100 as illustrated in FIG. 2A, icons of the menu set, except for the central icon, may disappear from the touch screen 100 as illustrated in FIG. 2B. That is, only the central icon may remain on the touch screen 100. Accordingly, the number of icons displayed on the touch screen 100 may be reduced by touching the central icon of the menu set.

Alternatively, if a predetermined period of time has elapsed without any manipulation by the user U when the menu set is displayed on the touch screen 100, only the central icon may remain on the touch screen 100.

Additionally, if the user U touches the central icon again as illustrated in FIG. 2C when only the central icon appears on the touch screen 100, the icons that had disappeared may again be displayed on the touch screen 100 as illustrated in FIG. 2A. That is, the menu set may again be displayed on the touch screen 100. Therefore, the number of icons displayed on the touch screen 100 may be increased by touching the central icon left on the screen by the user U.

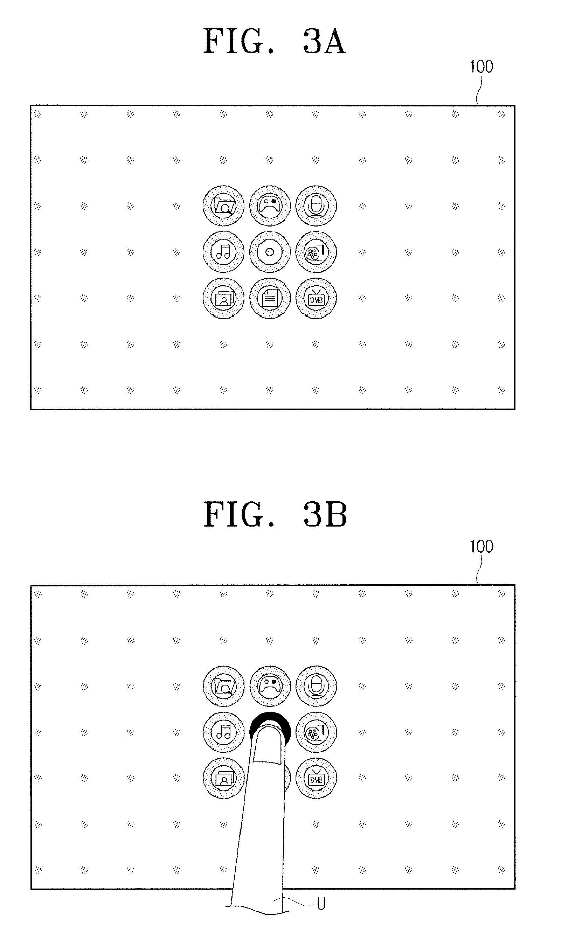

FIGS. 3A to 3D are detailed views of the menu set. FIG. 3A illustrates the menu set of FIG. 1A in greater detail, and the menu set of FIG. 3A may include nine icons. As illustrated in FIG. 3A, the nine icons may have a same size, and outlines of the icons may have a same circular shape.

An icon in the center of the menu set may be a "control icon", and the other eight icons, excluding the icon on the center from the menu set, may be "menu icons". The control icon may correspond to the central icon described in FIG. 1A.

The "menu icons" refer to icons indicating menu items (that is, icons used to input commands to execute commands corresponding to menu items), and the menu icons of FIG. 3A include icons indicating search, game, recording, music, movie, photograph, document and digital multimedia broadcasting (DMB) menu items.

The "control icon" is used to input a "control command relating to display of the menu set".

The "control command relating to display of the menu set" may include a "command to move the menu set", a "command to change the display state of the menu set", or other commands. For example, the user U may drag the control icon (central icon) to the desired position in response to the "command to move the menu set".

Additionally, the "command to change the display state of the menu set" causes the menu icons to disappear from the touch screen 100 by touching the control icon (central icon) of the menu set, or enables the menu icons that have disappeared to again be displayed on the touch screen 100 by touching the control icon left on the screen. Accordingly, the display state of the menu set may be identified by appearance or disappearance of a portion of the icons contained in the menu set.

FIG. 3A illustrates a lattice pattern at regular intervals on the touch screen 100. Positions in which the icons of the menu set are displayed may be identified by the lattice pattern.

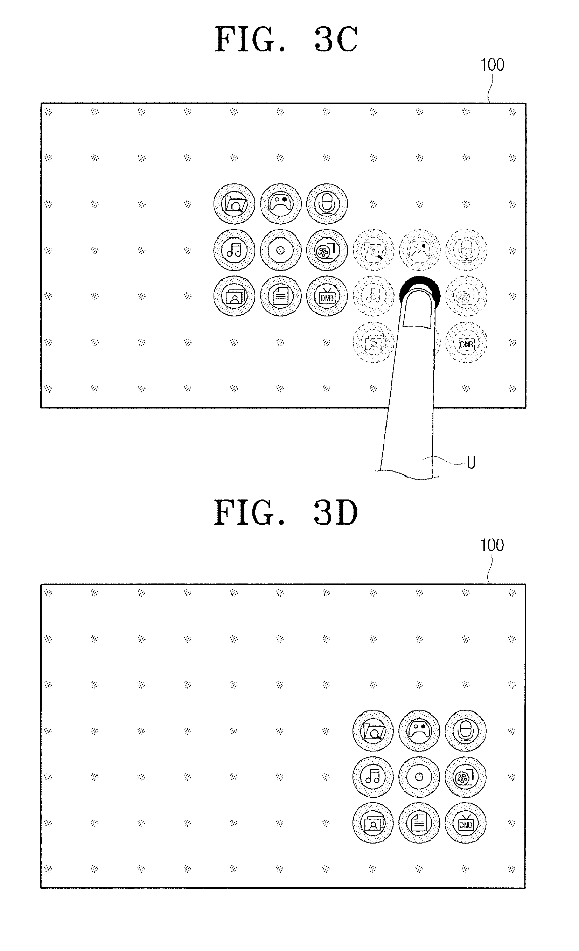

Accordingly, if the user U starts to drag the control icon as illustrated in FIG. 3B and stops to drag the control icon as illustrated in FIG. 3C, the control icon may move to a lattice placed at the drag end position as illustrated in FIG. 3D and the menu icons may move to lattices neighboring the control icon, and thus the menu set may be moved.

If there is no lattice at the drag end position, the control icon may move to a lattice closest to the drag end position, and the menu icons may move to lattices neighboring the control icon. The menu set may thereby be moved.

If dragging is terminated before the user U ends dragging as illustrated in FIG. 3C, the menu icons may be displayed semi-transparently at lattices in which the menu icons may be placed.

The process to move the menu set by the dragging operation of the user U was described above. However, the menu set may be moved by operations other than the dragging operation of the user U.

For example, if the user U touches the control icon as illustrated in FIG. 3B, and then touches another lattice in which the control icon is not placed as illustrated in FIG. 3C, the control icon may move to the other touched lattice and the menu icons may move to lattices neighboring the control icon as illustrated in FIG. 3D, and accordingly it is possible to move the menu set.

Alternatively, if the user U touches the control icon and then drags the control icon a short distance in a specific direction, the control icon may move to a lattice placed in the specific direction among lattices adjacent to the control icon, and the menu icons may move to lattices neighboring the control icon, and accordingly it is possible to move the menu set.

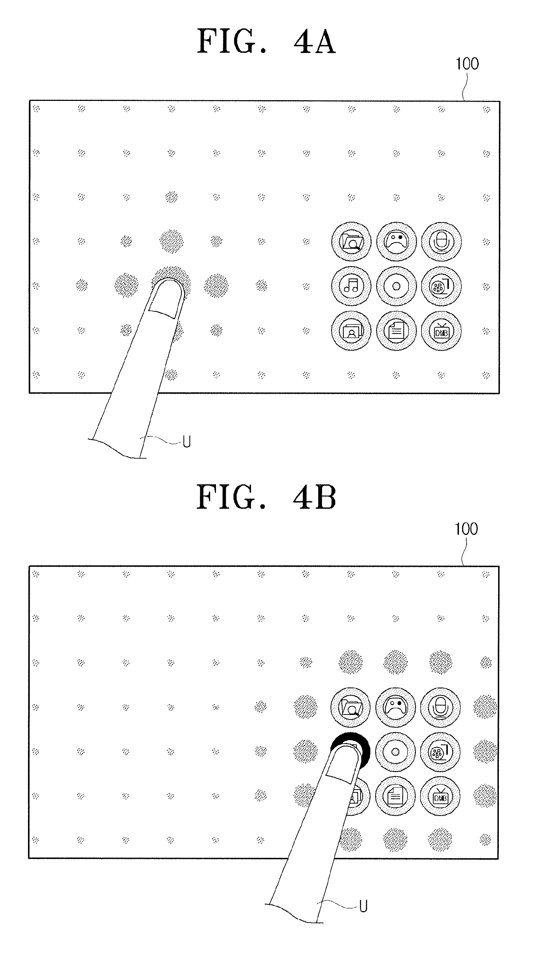

Hereinafter, a process to change lattices displayed on the touch screen 100 when the user U touches the touch screen 100 will be described in detail with reference to FIGS. 4A and 4B.

In FIG. 4A, a size of the lattice touched by the user U may become larger than those of other lattices. Additionally, lattices closest to the touched lattice (lattices placed at an upper edge, a lower edge, a left edge and a right edge of the touched lattice) may be smaller than the touched lattice, but may be larger than other lattices, excluding the touched lattice.

Accordingly, when the user U touches the touch screen 100, the sizes of lattices appearing on the touch screen 100 may be changed. The touched lattice, the lattices closest to the touched lattice, and lattices adjacent to the lattices closest to the touched lattice are ordered in size from largest to smallest.

In addition, if the user U touches the menu icon as illustrated in FIG. 4B, the sizes of lattices adjacent to the menu set may be changed. Specifically, the sizes of lattices closest to the menu set (lattices placed at an upper edge, a lower edge, a left edge and a right edge of the menu set) may become larger. Lattices adjacent to the lattices closest to the menu set (lattices placed at an upper edge, a lower edge, a left edge and a right edge of the lattices closest to the menu set) may be slightly smaller in size than the lattices closest to the menu set.

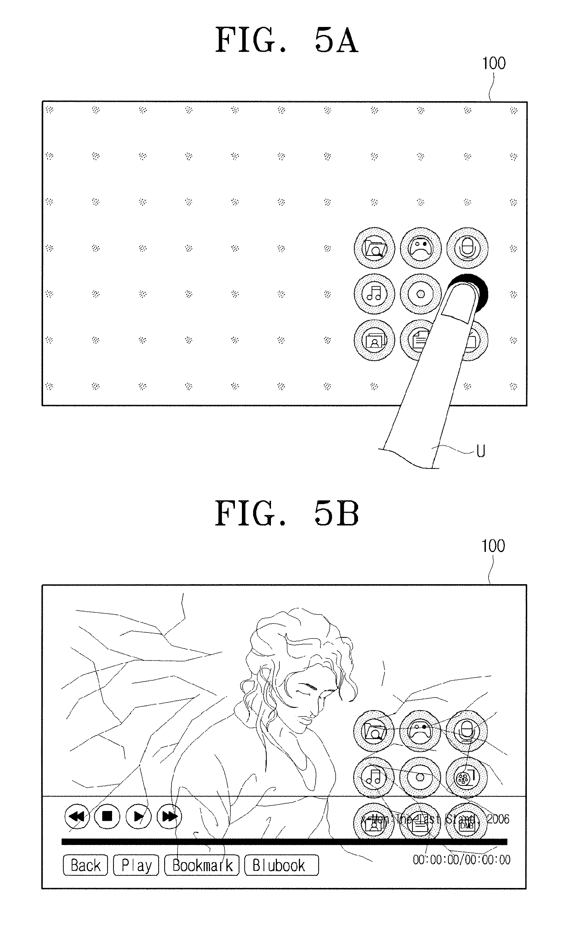

Hereinafter, a process to execute a command corresponding to a menu item identified by a menu icon using the menu icon of the menu set, and a process to change the display state of the menu set when executing the command corresponding to the menu item will be described in detail with reference to FIGS. 5A to 5D.

If the user U touches a menu icon, a command corresponding to a menu item identified by the menu icon may be executed. For example, if the user U touches a movie menu icon as illustrated in FIG. 5A, the movie menu item may be actuated, and a moving image player may appear on the touch screen 100 in response to selection of the movie menu item, as illustrated in FIG. 5B. Additionally, the menu set may become semi-transparent to allow the user to view a moving image played back through the moving image player.

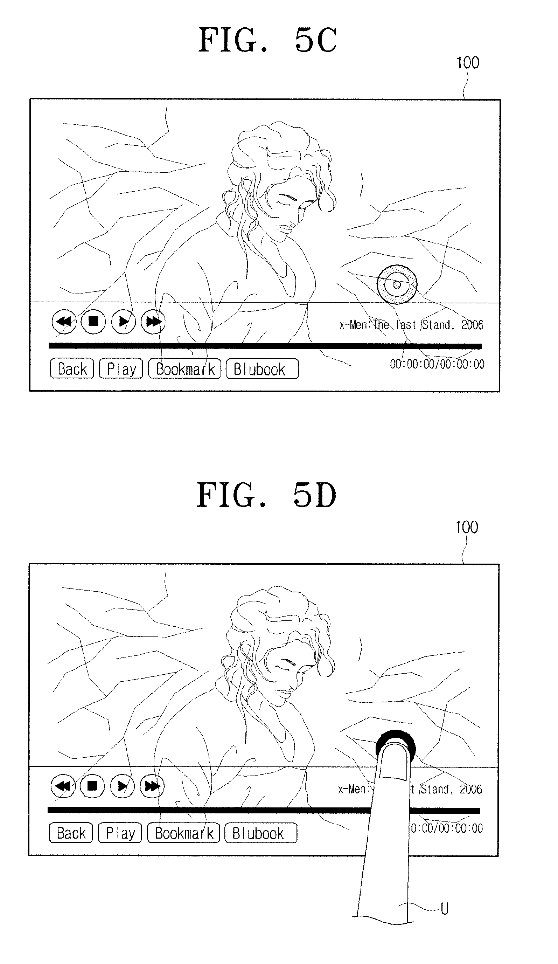

If the user U does not perform any manipulation for a predetermined period of time after the moving image player appears, only the semi-transparent control icon may be left on the touch screen 100, as illustrated in FIG. 5C. That is, the semi-transparent menu icons may disappear from the touch screen 100.

If the user U touches the semi-transparent central icon when the semi-transparent menu set is displayed on the touch screen 100 together with the moving image player as illustrated in FIG. 5B, only the semi-transparent control icon may also appear on the touch screen 100, as illustrated in FIG. 5C.

In addition, if the user U touches the semi-transparent control icon as illustrated in FIG. 5D when the semi-transparent control icon is displayed on the touch screen 100 together with the moving image player as illustrated in FIG. 5C, the semi-transparent menu set may again appear on the touch screen 100 as illustrated in FIG. 5B.

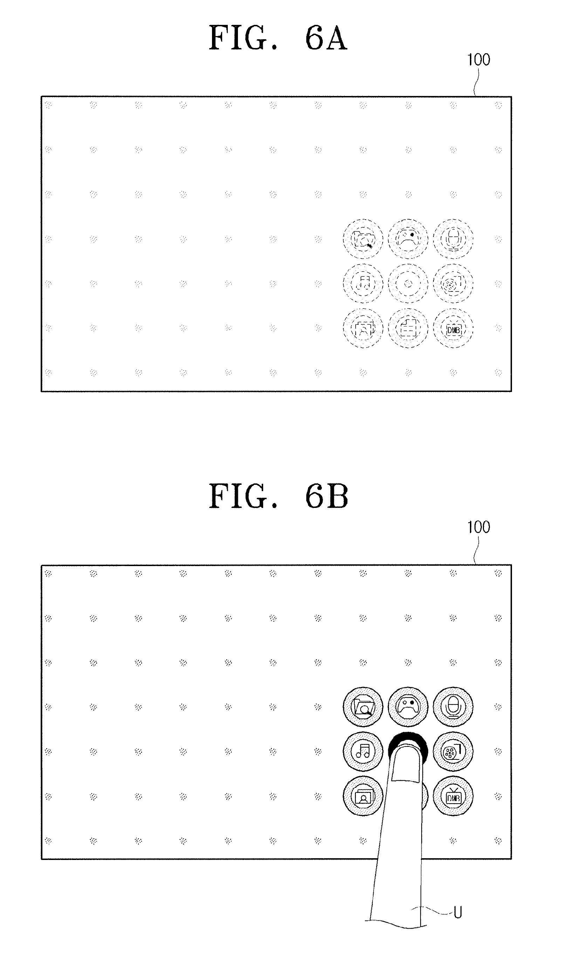

Another process to change the display state of the menu set is described in detail below with reference to FIGS. 6A and 6B.

If there is no manipulation by the user U for a predetermined period of time in a situation when the menu set is displayed on the touch screen 100, the menu set may become semi-transparent (or faintly visible) as illustrated in FIG. 6A.

Additionally, if the user U touches the semi-transparent control icon when the semi-transparent menu set is displayed on the touch screen 100 as illustrated in FIG. 6A, the non-transparent (or clearly visible) menu set may again appear on the touch screen 100 as illustrated in FIG. 6B.

Alternatively, if the user U does not perform any manipulation for a predetermined period of time in a situation when the semi-transparent menu set is displayed on the touch screen 100 as illustrated in FIG. 6A, only the semi-transparent control icon may remain on the touch screen 100.

Alternatively, if the user U does not perform any manipulation for a predetermined period of time in a situation when the semi-transparent menu set is displayed on the touch screen 100 as illustrated in FIG. 6A, the semi-transparent menu set may disappear from the touch screen 100.

The above-described processes may be applied to a situation in which the semi-transparent menu set is displayed on the touch screen 100 along with an execution screen corresponding to a specific menu item. Specifically, if there is no manipulation by the user U for a predetermined period of time in a situation when the semi-transparent menu set is displayed on the touch screen 100 along with the execution screen, menu blocks displayed on the execution screen may disappear together with the menu set.

For example, if the user U does not perform any manipulation for a predetermined period of time in a situation when the moving image player in response to the selection of the movie menu item is displayed on the touch screen 100 together with the semi-transparent menu set as illustrated in FIG. 5B, the menu blocks at the bottom of the touch screen 100 of FIG. 5B, which are required to play back the moving image, may disappear together with the semi-transparent menu set.

If the user U touches regions on the touch screen 100 in which the menu blocks and menu set are not displayed, the menu blocks together with the menu set may also disappear.

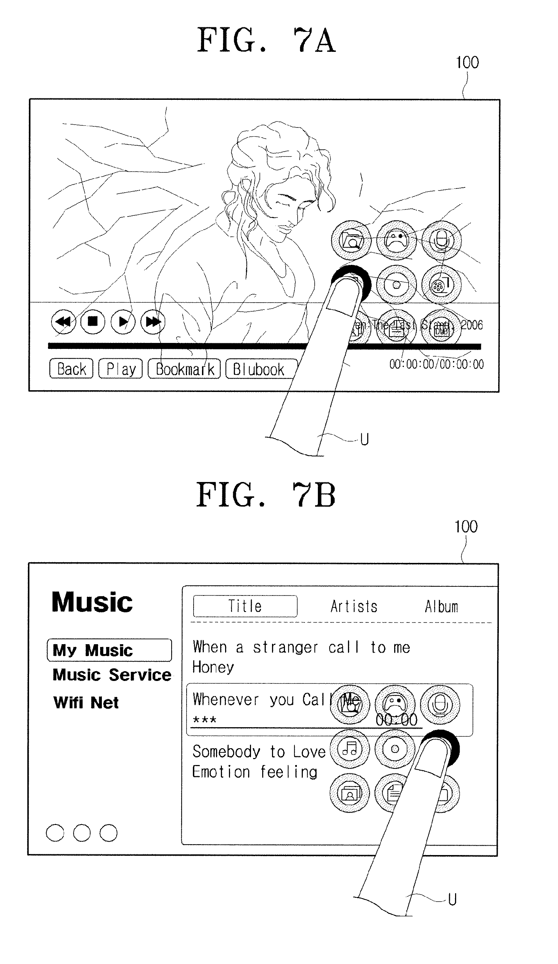

A process to move directly to another menu item using the menu set while executing a command corresponding to a specific menu item will now be described in detail with reference to FIGS. 7A and 7B.

FIG. 7A illustrates the touch screen 100 on which the moving image player appears in response to the selection of the movie menu item. The menu set is displayed in semi-transparent form on the touch screen 100. That is, the menu set is displayed overlapping with the moving image player.

The menu set may include a control icon and menu icons indicating the uppermost menu items. Accordingly, the menu items identified by the menu icons of the menu set, for example search, game, recording, music, movie, photograph, document and DMB menu items, may be the uppermost menu items.

If the menu icons of the menu set displayed on the touch screen 100 are identical with each other regardless of the type of execution screen displayed on the touch screen 100, the user may execute a command corresponding to the uppermost menu item, other than the uppermost menu item to which a currently executed screen belongs, and may enable an execution screen for the uppermost menu item to be activated on the touch screen 100, without searching for a menu item several times.

Accordingly, the user U may touch the menu icon appearing on the menu set, and thus an execution screen for an uppermost menu item identified by the touched menu icon may be displayed on the touch screen 100.

For example, if the user U touches the icon indicating the music menu item when the moving image player together with the menu set are displayed on the touch screen 100 as illustrated in FIG. 7A, an audio player may appear on the touch screen 100 in response to the selection of the music menu item as illustrated in FIG. 7B.

In the same manner, if the user U touches the icon indicating the movie menu item when the audio player together with the menu set are displayed on the touch screen 100 as illustrated in FIG. 7B, the moving image player may appear on the touch screen 100 in response to the selection of the movie menu item as illustrated in FIG. 7A.

If an icon indicating a menu item relating to content playback is touched by the user U, it is possible to directly display on the touch screen 100 a content player which plays back content among recently played-back content from the last playback time through a content player in response to the selection of the menu item, or another content player which is initiated to play back content starting from the last playback time.

Additionally, if a menu icon touched by the user U is the icon indicating the menu item relating to content playback, a list of content playable in a content player may be directly displayed on the touch screen 100.

Content, herein, may refer to a moving image such as music or a movie, or a still image such as a picture. The menu icon for each type of content may be a music menu icon, a movie menu icon or a picture menu icon.

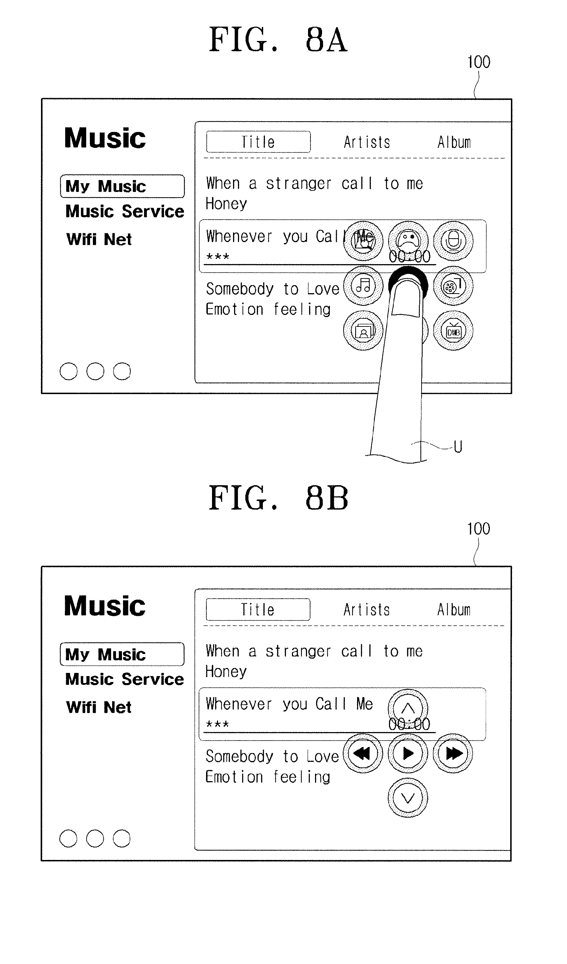

Hereinafter, a process to convert the menu set into a manipulation set and displaying the manipulation set when the content player and menu set are displayed on the touch screen 100 will be described with reference to FIGS. 8A and 8B. The manipulation set may be a combination of manipulation icons to input commands relating to content playback.

If the user U touches the control icon for a sustained period of time when the audio player appears on the touch screen 100 along with the menu set as illustrated in FIG. 8A, the menu set may be converted into the manipulation set to operate the audio player as illustrated in FIG. 8B. The action "sustained touch" is an action in which fingers of the user U remain in contact with the icon for a predetermined period of time after the fingers of the user U has come into contact with the icon.

If the user U touches a manipulation icon placed at the center of the manipulation set for a sustained period of time when the audio player along with the manipulation set are displayed on the touch screen 100 as illustrated in FIG. 8B, the manipulation set may change back to the menu set illustrated in FIG. 8A.

Referring to FIG. 8A, the manipulation set of the audio player may include five manipulation icons. In addition, the five manipulation icons may have the same size, and outlines of the icons may have the same circular shape.

Additionally, the size and outline shape of the manipulation icons may be the same as those of the menu icons (or the control icon). If needed, the size and outline shape of the manipulation icons may be different from those of the menu icons (or the control icon).

Referring to FIG. 8B, the manipulation set of the audio player may include manipulation icons to input a Music playback/stop command, a fast-forward command, a rewind command, a volume-up command and a volume-down command.

However, the manipulation set may include different types of manipulation icons according to the type of content player. For example, a manipulation set for a DMB player may include manipulation icons to input a volume-up command, a volume-down command, a channel-up command and a channel-down command.

The moving image player may have the same manipulation set as that of the audio player.

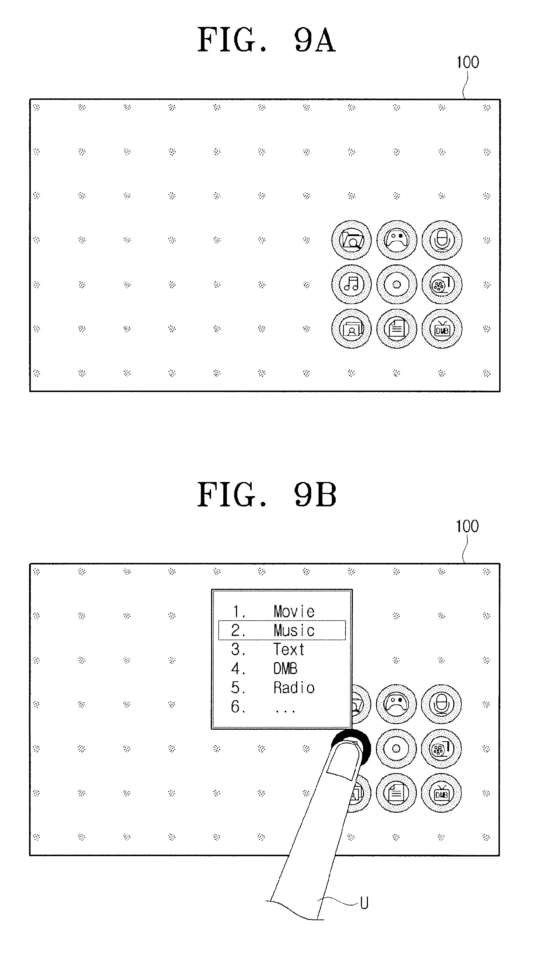

A process to change a menu item identified by a menu icon to another menu item will be now described in detail with reference to FIGS. 9A and 9B.

If the user U touches a menu icon for a sustained period of time when the menu set is displayed on the touch screen 100 as illustrated in FIG. 9A, a menu list may be displayed on a region neighboring the touched menu icon as illustrated in FIG. 9B. At this time, if the user U touches one menu item from among menu items of the menu list, the menu icon may change to an icon indicating the touched menu item.

For example, if the user U touches a radio menu item from among menu items of the menu list displayed after the user U touches the music menu icon for a sustained period of time as illustrated in Fig. 9B, the music menu icon may be changed to a radio menu icon indicating the radio menu item.

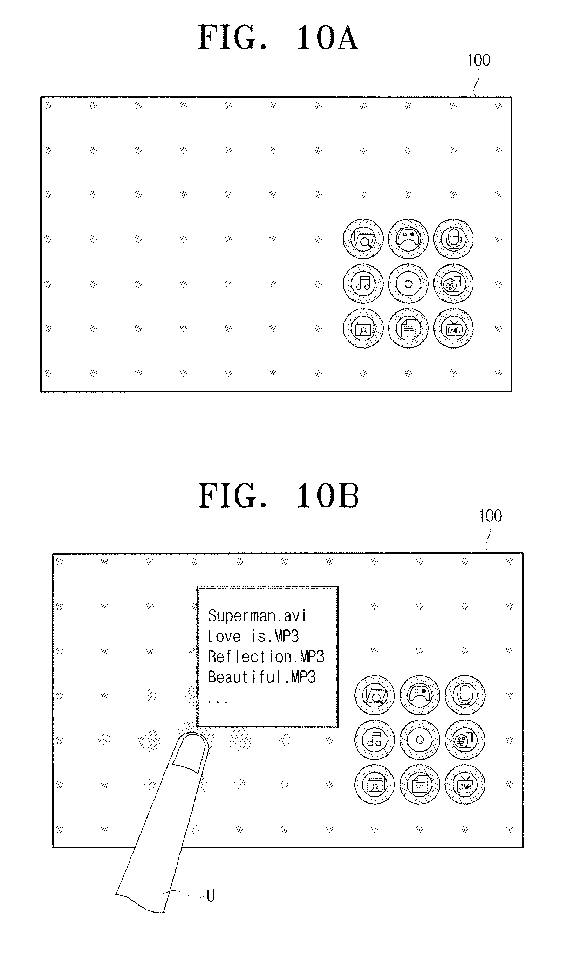

Hereinafter, a process to display a list of content that has been recently played back will be described in detail with reference to FIGS. 10A and 10B.

If the user U touches for a sustained period of time a lattice in which the menu set does not exist when the lattices are arranged and displayed on the touch screen 100 as illustrated in FIG. 10A, the "list of content that has been recently played back" (hereinafter, simply referred to as a "content list") may be displayed on a region adjacent to the touched lattice as illustrated in FIG. 10B. In this situation, if the user U touches the content selected from among the content of the content list, the touched content may be played back.

For example, if the user U touches "Superman.avi" from among the content of the content list displayed after touching for a sustained period of time an optional lattice from among lattices displayed on the touch screen 100 as illustrated in FIG. 10B, a moving image player which plays back the "Superman.avi" may appear on the touch screen 100.

The lattice touched for a sustained period of time by the user U may become larger than other lattices, as illustrated in FIG. 10B. Additionally, lattices closest to the lattice touched for a sustained period of time (lattices placed at an upper edge, a lower edge, a left edge and a right edge of the lattice touched for a sustained period of time) may be smaller than the lattice touched for a sustained period of time, but larger than other lattices except for the lattice touched for a sustained period of time.

For example, when the user U touches the touch screen 100 for a sustained period of time, the sizes of lattices appearing on the touch screen 100 may change. The lattice touched for a sustained period of time, the lattices closest to the lattice touched for a sustained period of time, and lattices adjacent to the lattices closest to the lattice touched for a sustained period of time are ordered in size from largest to smallest.

It is possible to display a list of newly acquired content or a list of content with a high playback frequency, in addition to the list of content that has been recently played back. Additionally, the user U may set the type of lists displayed when the user U touches for a sustained period of time the lattice in which the menu set does not exist.

Furthermore, if the user U touches for a sustained period of time the lattice in which the menu set does not exist, a list of Internet websites that have been recently accessed or a list of Internet websites a user frequently accesses may also be displayed on the touch screen 100.

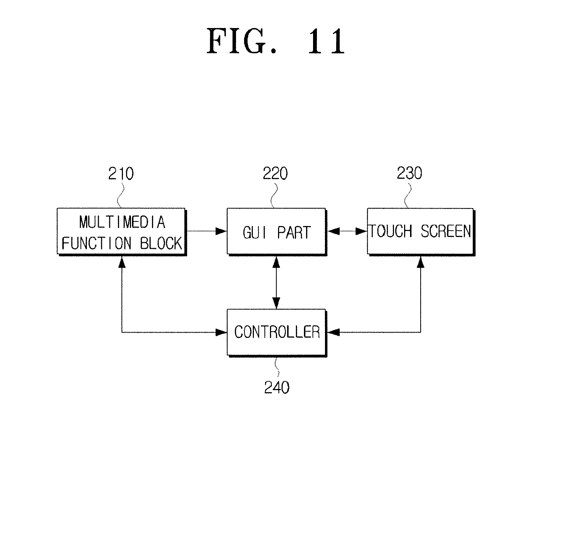

FIG. 11 is a block diagram of a multimedia device capable of providing a graphical user interface (GUI) which is implemented using the menu set described above. In FIG. 11, the multimedia device includes a multimedia function block 210, a GUI unit 220, a touch screen 230, and a controller 240.

The multimedia function block 210 may perform original functions of the multimedia device, such as file searching, game, recoding, music playback, movie playback, picture playback, document preparation, DMB playback or other functions.

The multimedia function block 210 may receive a signal corresponding to an image from an external device through a wire or wireless network connection. The multimedia function block 210 may have an internal signal source, such as a memory or a reproducing device, to generate a signal corresponding to an image.

The GUI unit 220 may add a GUI implemented using the menu set to an image generated by the multimedia function block 210.

The image to which the GUI implemented using the menu set output from the GUI unit 220 is added may be displayed on the touch screen 230. Additionally, the touch screen 230 is used to input the actions of the user U, such as "touch", "sustained touch", "drag" or other actions.

The controller 240 may control operations to perform functions of the multimedia function block 210 according to a user's manipulation input through the touch screen 230 or manipulating units (not illustrated).

Additionally, the controller 240 may control the GUI unit 220 so that a GUI provided in response to the user's manipulation may be displayed on the touch screen 230.

Specifically, if a user inputs through the touch screen 230 a command to move the menu set, the controller 240 may control the GUI unit 220 so that the menu set may be moved and displayed in response to the input command.

If the user inputs through the touch screen 230 a command to change the display state of the menu set, the controller 240 may control the GUI unit 220 so that the display state of the menu set may be changed and the menu set may be displayed in response to the input command.

In addition, if the user does not input any manipulation command for a predetermined period of time through the touch screen 230, the controller 240 may also control the GUI unit 220 so that the display state of the menu set may be changed and the menu set may be displayed.

Furthermore, if the user touches a lattice displayed on the touch screen 230, the controller 240 may permit the GUI unit 220 to change the display state of lattices, or to display the menu list or the content list on a region neighboring the touched lattice.

The controller 240 may also control the GUI unit 220 so that the menu set may be converted into the manipulation set and the converted manipulation set may be displayed. In addition, the controller 240 may control the operations to perform functions of the multimedia function block 210 so that a command corresponding to the menu item touched by the user can be executed.

When power is on, the touch screen 230 displays, for example, at least one of a menu set and an image corresponding to a signal from the multimedia function block 210 or a signal internally generated from a unit disposed in the touch screen 230.

The touch screen 230 may have a function unit to perform the functions and operations of the controller 240 and the GUI unit 220 to display and control an image and/or icons on a touch screen device thereof. Accordingly, the touch screen 230 can be connected to the multimedia function block 210 to display and control the touch screen device.

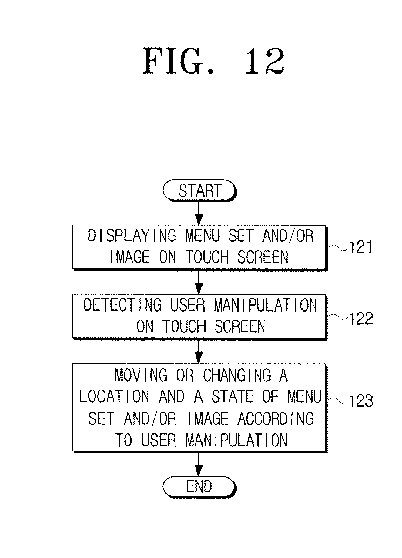

FIG. 12 is a flowchart illustrating a method of displaying controlling a menu set and an image on a touch screen 230 according to a manipulation on the touch screen 230 according to an embodiment of the present general inventive concept. Referring to FIG. 12, in operation 121, at least one of a menu set and an image on a touch screen is displayed. In operation 122, a user manipulation on the touch screen is detected. In operation 123, at least one of a location and a state of the at least one of the menu set and the image according to a user manipulation on the touch screen is moved and/or changed.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

As described above, according to various exemplary embodiments of the present general inventive concept, a user can be provided with a menu which can be manipulated more easily, and which is displayed with a superior visual effect on a screen that is relatively small in size, using a menu set that can move on a touch screen.

According to various exemplary embodiments of the present general inventive concept, a menu which the user can more easily manipulate, and which provides a superior visual effect, may also be provided on a screen that is relatively small in size, using a menu set the display state of which may change.

Furthermore, according to various exemplary embodiments of the present general inventive concept, it is also to possible to display a menu which can be manipulated more easily, and which effectively shows the menu items, using a menu set which may move directly between the uppermost menu items.

Although various embodiments of the present general inventive concept have been illustrated and described, it will be appreciated by those skilled in the art that changes may be made in these embodiments without departing from the principles and spirit of the general inventive concept, the scope of which is defined in the appended claims and their equivalents.

## Claims

1. A method to provide a menu on a display, comprising:
displaying a menu set including at least one icon on a touch screen;
moving the menu set according to a user manipulation on the touch screen; and
displaying the menu set.

2. The method as claimed in claim 1, wherein the menu set comprises:
at least one menu icon indicating at least one menu item; and
a control icon used to input a control command relating to display of the menu set.

3. The method as claimed in claim 2, wherein the control command relating to display of the menu set comprises:
a command to move and display the menu set and a command to change a display state of the menu set.

4. The method as claimed in claim 3, wherein the command to change the display state of the menu set comprises:
a command to enable the at least one menu icon of the menu set to disappear from the touch screen;
a command to allow the at least one menu icon of the menu set to be semi-transparently displayed; and
a command to enable the menu set to disappear from the touch screen.

5. The method as claimed in claim 1, wherein the moving operation comprises:
moving a center of the menu set to one lattice from among lattices on the touch screen; and
displaying the menu set.

6. The method as claimed in claim 5, wherein the lattices are visibly displayed on the touch screen.

7. The method as claimed in claim 1, wherein each of the at least one menu icon has the same size.

8. The method as claimed in claim 1, wherein an outline of each of the at least one menu icon has the same shape.

9. The method as claimed in claim 8, wherein the outline has a circular shape.

10. The method as claimed in claim 1, wherein the user manipulation comprises:
at least one of touching the touch screen twice and dragging on the touch screen.

11. The method as claimed in claim 1, wherein the moving operation comprises:
if the user drags a spot of the menu set, moving and displaying the menu set so that the spot of the menu set moves by being dragged.

12. The method as claimed in claim 11, wherein the spot of the menu set is the control icon used to input the control command relating to display of the menu set.

13. The method as claimed in claim 1, wherein the moving operation comprises:
if the user touches a spot of the menu set and touches a spot on the touch screen, moving and displaying the menu set so that the spot of the menu set moves to the spot on the touch screen.

14. The method as claimed in claim 1, wherein the moving operation comprises:
if the user drags a spot of the menu set, moving and displaying the menu set so that the spot of the menu set moves to a lattice closest to the drag end position among lattices on the touch screen.

15. The method as claimed in claim 1, wherein the moving operation comprises:
if the user drags a spot of the menu set, moving and displaying the menu set so that the spot of the menu set moves to a lattice placed in a direction of dragging among lattices which are adjacent to the spot of the menu set on the touch screen.

16. A method to display a menu using a touch screen, comprising:
displaying a menu set including two or more menu icons;
displaying a control icon to control the menu set; and
moving the menu set according to a movement of the control icon and displaying the menu set.

17. The method as claimed in claim 16, wherein the menu set comprises:
at least two selected from among menu icons indicating search, game, recording, music, movie, photograph, document and digital multimedia broadcasting (DMB) menu items;
the menu icons execute commands corresponding to each menu item; and
the control icon executes the command to change the display state of the menu set.

18. A method to display a menu using a touch screen, comprising :
displaying a menu set including two or more icons having a menu icon indicating a menu item and a control icon to control the menu icon;
moving the menu set according to a movement of the control icon; and
displaying the menu set.

19. The method as claimed in claim 18, further comprising:
executing a command corresponding to the menu item, if a user touches the menu icon; and
changing the display state of the menu set, if the user touches the control icon.

20. A method to display a menu using a touch screen, comprising:
displaying a menu set including two or more icons having a menu icon indicating a menu item and a control icon to control the menu icon.

21. A method to provide a menu, comprising:
displaying on a touch screen a menu set including at least one icon; and
changing a display state of the at least one icon contained in the menu set; and
displaying the menu set.

22. The method as claimed in claim 21, wherein a number of icons contained in the menu set displayed in the changing operation is less than a number of icons contained in the menu set displayed in the displaying operation.

23. The method as claimed in claim 22, wherein the menu set displayed in the displaying operation includes a plurality of icons; and
the changing operation includes changing and displaying the menu set so that the icons contained in the menu set are combined into a single icon, if a predetermined period of time has elapsed after the displaying operation.

24. The method as claimed in claim 23, wherein the menu set displayed in the displaying operation includes at least one menu icon indicating at least one menu item, and a control icon used to input a control command relating to display of the menu set; and
the menu set displayed in the changing operation is a menu set in which the at least one menu icon disappears from the menu set displayed in the displaying operation.

25. The method as claimed in claim 21, wherein a number of icons contained in the menu set displayed in the changing operation is greater than a number of icons contained in the menu set displayed in the displaying operation.

26. The method as claimed in claim 25, wherein the menu set displayed in the displaying operation includes a single icon; and
the changing operation includes changing and displaying the menu set so that the menu set includes a plurality of icons, if a specific manipulation is performed by a user on the touch screen after the displaying operation.

27. The method as claimed in claim 26, wherein the menu set displayed in the displaying operation includes a control icon used to input a control command relating to display of the menu set; and
the menu set displayed in the changing operation is a menu set to which at least one menu icon indicating at least one menu item in the menu set displayed in the displaying operation is added.

28. The method as claimed in claim 27, wherein the specific manipulation of the user on the touch screen is touching the control icon.

29. The method as claimed in claim 21, wherein the displaying operation includes causing the menu set displayed in the displaying operation to become semi-transparent and displaying the semi-transparent menu set.

30. The method as claimed in claim 29, wherein the changing operation is performed if a predetermined period of time has elapsed after the displaying operation.

31. The method as claimed in claim 29, further comprising:
changing and displaying the menu set so that the icons contained in the menu set displayed semi-transparently in the changing operation are combined into a single icon.

32. The method as claimed in claim 21, further comprising:
allowing the menu set to disappear together with menu blocks displayed on the touch screen.

33. The method as claimed in claim 32, wherein the allowing operation is performed if a predetermined period of time has elapsed during which there is no manipulation by the user using the menu set, or if the user touches a region in which there are no the menu set and menu blocks.

34. A method to display a menu using a touch screen, comprising:
displaying a menu set including two or more icons having a menu icon indicating a menu item and a control icon to control the menu icon;
detecting contact of a touch screen by a user; and
hiding the menu icon, if it is detected that the control icon is touched on the touch screen.

35. The method as claimed in claim 34, further comprising:
redisplaying the menu icon, if it is detected that the control icon is again touched after the menu icon has become hidden.

36. The method as claimed in claim 34, further comprising:
hiding the control icon, if it is detected that the control icon is again touched after the menu icon has become hidden.

37. The method as claimed in claim 36, further comprising:
displaying the control icon and menu icon, if it is detected that the control icon is again touched after the control icon has become hidden.

38. A method to display a menu using a touch screen, the method comprising:
displaying a menu set including two or more icons having a menu icon indicating a menu item and a control icon to control the menu icon;
processing the menu icon to be semi-transparent and displaying the semi-transparent menu icon, if contact of the menu set by a user is not detected for a predetermined period of time; and
processing the control icon to be semi-transparent and displaying the semi-transparent control icon, if contact of the menu set by a user is not detected for a predetermined period of time after the menu icon has been processed to become semi-transparent.

39. The method as claimed in claim 38, further comprising:
changing the menu set back to an original state if contact of the touch screen by a user is detected after the menu icon or the control icon have been processed to become semi-transparent and the semi-transparent menu icon or the semi-transparent control icon have been displayed.

40. A method to provide a menu on a display, comprising:
displaying on a touch screen an execution screen in response to execution of a command corresponding to a specific menu item;
overlapping a menu set including at least one menu icon indicating at least one uppermost menu item with the execution screen; and
displaying on the touch screen the menu set together with the execution screen.

41. The method as claimed in claim 40, wherein the overlapping operation includes semi-transparently displaying the menu set.

42. The method as claimed in claim 40, wherein the menu set comprises:
a control icon used to input a control command relating to display of the menu set.

43. The method as claimed in claim 40, further comprising:
displaying on the touch screen an execution screen for the uppermost menu item identified by a menu icon selected by a user from among the at least one menu icon contained in the menu set.

44. The method as claimed in claim 43, wherein the uppermost menu item identified by the menu icon selected by the user is not the uppermost menu item to which the specific menu item belongs.

45. The method as claimed in claim 43, wherein the user selects the menu icon by touching the menu set displayed on the touch screen.

46. The method as claimed in claim 43, wherein the displaying on the touch screen an execution screen for the uppermost menu comprises:
displaying on the touch screen an image in which content among recently played-back content is played back from the last playback time, if the uppermost menu item identified by the menu icon selected by the user relates to playback of content.

47. The method as claimed in claim 46, wherein the content comprises:
at least one of music content, moving image content and still image content.

48. The method as claimed in claim 43, wherein the displaying on the touch screen an execution screen for the uppermost menu comprises:
displaying on the touch screen an image which is initiated to play back content among recently played-back content from the last playback time, if the uppermost menu item identified by the menu icon selected by the user relates to playback of content.

49. The method as claimed in claim 43, wherein the displaying on the touch screen an execution screen for the uppermost menu comprises:
displaying on the touch screen an image on which a list of content capable of being played back is displayed, if the uppermost menu item identified by the menu icon selected by the user relates to playback of content.

50. A method to search for a menu using a touch screen, comprising:
displaying a menu set including menu icons indicating two or more menu items; detecting whether a first menu icon of the menu set is touched;
executing a command corresponding to a menu item identified by the first touched menu icon;
detecting whether a second menu icon of the menu set is touched; and
executing a command corresponding to a menu item identified by the second touched menu icon.

51. The method as claimed in claim 50, wherein the menu item identified by the first menu icon is used to search for a menu item relating to video; and
the menu item identified by the second menu icon is used to search for a menu item relating to music.

52. The method as claimed in claim 50, wherein the command corresponding to the menu item identified by the first menu icon and the command corresponding to the menu item identified by the second menu icon are simultaneously executed.

53. A graphical user interface (GUI) apparatus usable with a multimedia apparatus, the GUI comprising:
a menu set including a plurality of icons having one or more control icons; and
a touch screen to display the menu set and to receive one or more input commands through manipulation of the one or more control icons;
wherein the one or more input commands changes a display state of the menu set.

54. The GUI apparatus of claim 53, wherein the one or more control icons comprises:
one control icon positioned in a center of a matrix of the plurality of icons.

55. The GUI apparatus of claim 53, wherein the display state changes by at least one of moving a position of the menu set on the touch screen, changing a number of the plurality of icons being displayed and changing transparency of one or more of the plurality of icons.

56. The GUI apparatus of claim 53 wherein the manipulation of the one or more control icons includes at least one of dragging a control icon and clicking on the control icon.

57. The GUI apparatus of claim 53, wherein the display state changes after a predetermined period of time without the touch screen receiving an input command.

58. A multimedia apparatus, comprising:
a housing; and
a graphical user interface (GUI) disposed within the housing, comprising:
a menu set including a plurality of icons having one or more control icons; and
a touch screen to display the menu set and to receive one or more input commands through manipulation of the one or more control icons;
wherein the one or more input commands changes a display state of the menu set.

59. A method of using a graphical user interface (GUI), the method comprising:
selecting a control icon from a menu set including a plurality of icons on a touch screen; and
providing an input command through manipulation of the control icon to change a display state of the menu set including at least one of moving a position of the menu set on the touch screen, changing a number of the plurality of icons being displayed and changing transparency of one or more of the plurality of icons.

60. A computer-readable recording medium having embodied thereon a computer program to execute a method, wherein the method comprises:
selecting a control icon from a menu set including a plurality of icons on a touch screen; and
providing an input command through manipulation of the control icon to change a display state of the menu set including at least one of moving a position of the menu set on the touch screen, changing a number of the plurality of icons being displayed and changing transparency of one or more of the plurality of icons.

61. A method of providing a menu on a display, the method comprising:
displaying at least one of a menu set and an image on a touch screen; and
changing at least one of a location and a state of the at least one of the menu set and the image according to a user manipulation on the touch screen.

62. A touch screen apparatus, comprising:
a user interface to generate at least one of a menu set and an image to be displayed on a touch screen; and
a controller to change at least one of a location and a state of the at least one of the menu set and the image according to a user manipulation on the touch screen.
